(19) **Europäisches Patentamt / European Patent Office / Office européen des brevets**

(11) **EP 2 908 565 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **15155047.2**

(22) Anmeldetag: **13.02.2015**

(51) Int Cl.:
*H04W 4/90* (2018.01)   *H04W 76/50* (2018.01)
*H04W 4/02* (2018.01)   *H04W 84/18* (2009.01)
*H04W 88/02* (2009.01)   *H04W 12/04* (2009.01)
*H04W 76/14* (2018.01)   *H04L 29/06* (2006.01)
*H04W 12/08* (2009.01)

(54) **Verfahren, Vorrichtung und Drahtlosnetzwerkumgebung zum Austausch von Daten**

Method, device and wireless network environment for exchanging data

Procédé, dispositif et environnement de réseau sans fil destinés à l'échange de données

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2014 DE 102014202758**

(43) Veröffentlichungstag der Anmeldung:
**19.08.2015 Patentblatt 2015/34**

(73) Patentinhaber: **Fraunhofer-Gesellschaft zur Förderung der angewandten Forschung e.V.
80686 München (DE)**

(72) Erfinder:
• **Al-Akkad, Amro
53225 Bonn (DE)**

• **Ramirez, Leonardo
10713 Berlin (DE)**
• **Zimmermann, Andreas
53225 Bonn (DE)**

(74) Vertreter: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) Entgegenhaltungen:
**EP-A1- 2 605 609      US-A1- 2006 116 148
US-A1- 2011 087 795      US-B1- 7 965 983
US-B2- 7 877 785**

## Beschreibung

Die vorliegende Erfindung bezieht sich auf ein Verfahren zum Austausch von Daten zwischen einem Anbieter und einem dem Anbieter unbekannten Annehmer, auf eine Anbieter-Vorrichtung, eine Annehmer-Vorrichtung, auf eine Drahtlosnetzwerkumgebung und auf ein Computerprogramm. Die Erfindung bezieht sich auf ein Verfahren zum Erfassen und Sammeln drahtloser Geräte.

Diverse technische Ansätze versuchen, ein Auffinden, eine Nachverfolgung oder eine Identifikation von Geräten und/oder Personen oder Tieren in der Nähe der Geräte zu ermöglichen.

Insbesondere besteht eine technische Aufgabe darin, Personen in Katastrophenszenarien ausfindig zu machen, in denen eine Kommunikationsinfrastruktur zumindest teilweise zusammengebrochen oder unbrauchbar ist. So ist es beispielsweise für Rettungskräfte interessant, ob nach einer Lawine, nach einer Überflutung oder sonstigen Katastrophen in einem Bereich hilfesuchende Menschen anwesend sind. Für einen Hilfesuchenden oder für Menschen in abgelegenen Gebieten, die beispielsweise keine Mobilfunkinfrastruktur aufweisen, kann es schwierig sein, sich optisch oder akustisch bemerkbar zu machen.

Es existieren Ansätze, die Systeme liefern, die sich auf eine funktionierende Netzwerkinfrastruktur stützen, um Hilfebedarfsmitteilungen zu versenden. So kann beispielsweise per Knopf- oder Tastendruck ein vorgefertigter Notruf versendet werden. Dieser Notruf wird über eine bestehende Infrastruktur, wie etwa ein Mobilfunknetz weitergeleitet. Nachteilig an solchen Ansätzen ist, dass eine Infrastruktur benötigt wird, die etwa durch eine Naturkatastrophe beschädigt oder zerstört sein kann.

Andere Ansätze nutzen beispielsweise eine Bluetooth®-Verbindung, um Bluetooth®-Geräte ausfindig zu machen. Nachteilig an Bluetooth®-Verbindungen ist, dass Bluetooth®-Geräte vor einem Datenaustausch miteinander bekannt gemacht werden müssen, was im Allgemeinen als "Pairing" bezeichnet wird. Ein Auffinden zuvor unbekannter Geräte ist nicht vorgesehen.

Andere Systeme verwenden proprietäre Geräte und Protokolle, um einen Datenaustausch zwischen den jeweiligen Geräten zu ermöglichen. Eine Kompatibilität zwischen den Geräten kann sich auf Geräte eines Herstellers bzw. Standards oder Geräte mit Software eines Herstellers bzw. Standards beschränken. Gleichzeitig kann sich eine erfolgreiche Lokalisierung mit oder von Geräten anderer Standards schwierig gestalten, etwa bei Geräten zum Aufspüren von Lawinen Verschütteter, die von unterschiedlichen Anbietern bereitgestellt werden und ggf. basierend auf verschiedenen jeweils proprietärer Kommunikationsstandards inkompatibel zu einander sind.

Andere Forschungsansätze verwenden Verfahren, die ein Ändern oder Auswechseln des Mobiltelefon-Betriebssystems erfordern, das heißt, es bspw. einem "Jailbreak" zu unterziehen oder es zu "rooten".

Eine Haggle-Plattform, wie sie beispielsweise in Su, Scott et al. 2007, beschrieben ist, ermöglicht es, mit in der Nähe befindlichen Mobilfunknutzern, Daten-Inhalte auszutauschen, ohne dass dafür eine feste Infrastruktur erforderlich wäre. Mittels eines "Veröffentlichen-Teilnehmen" (Publish-Subscribe)-Systems können Nutzer sog. "Interessen" mittels Schlüsselwörtern ausdrücken. Anschließend können Nutzer Inhalte von anderen Netzwerkteilnehmern erhalten, abhängig davon, wie gut die Interessen mit von anderen Nutzern angebotenen Inhalten übereinstimmen. Haggle kann beispielsweise auf Windows® Mobilegeräten und Android™ betrieben werden. Trotz seiner Android™-Verteilung benötigt es spezielle Privilegien, die nicht allen Nutzern zur Verfügung stehen, etwa einen sogenannten "Root-Zugang" für Bluetooth®- und Drahtlosverbindungen, wie etwa Wi-Fi®.

Auch die Arbeit von Shanshan, Shere et al., 2011, unterstützt das Auffinden und Verbinden drahtloser Geräte durch Wi-Fi® im IEEE 802.11™ Ad-hoc-Modus, um eine opportunistische Kommunikation zu ermöglichen. Ein Gerät kündigt seine Gegenwart in einer Netzwerkumgebung an, indem es spezielle Nachrichten, sogenannte "Beacons" ausstrahlt. Diese Beacons weisen relevante Informationen, wie etwa eine Geräte-Kennung (Device-ID) auf, die in der Netzwerkkennung (engl. Service Set Identifier - SSID) enthalten sein können. Dies ermöglicht das gleichzeitige Ausfindigmachen bzw. Erkennen mehrerer Geräte mittels der relevanten Informationen, da ein Gerät mehrere Beacons von mehreren Geräten empfangen kann. Dies kann ohne ein Herstellen einer Verbindung erfolgen. Obwohl dieser Lösungsansatz gute Ergebnisse im Bezug auf die Energieeffizienz und eine zufriedenstellende Verbindungsgeschwindigkeit zwischen Partnergeräten liefert, funktioniert er bei im Handel erhältlichen Smartphones nicht. Dies ist darauf zurückzuführen, dass er Wi-Fi® im Ad-Hoc-Modus verwendet, der bei Mobiltelefon-Betriebssystemen nicht verfügbar ist.

Aus US 2006/0116148 A1 ist ein Verfahren bekannt, mit dem zwei drahtlose Endgeräte nach dem Herstellen einer Verbindung ein Protokoll zur Übermittlung von Daten aushandeln können.f

In US 7,965,983 B1 ist ein Konzept beschrieben, bei dem medizinische Patienteninformationen sicher zu einem medizinischen Personal übermittelt werden können. Die Übertragung ist abhängig von einer Authentifizierung eines eindeutigen Codes, der mit einer Patientenvorrichtung assoziiert ist.

In US 7,877,785 B2 ist ein Verfahren zum Bereitstellen eines Terminals mit einem Notfallzugang beschrieben. Das Verfahren umfasst ein Definieren von Notfall-SSIDs, die in einem Notfall einen Zugang zu dem LAN ermöglichen.

Wünschenswert wäre demnach ein Verfahren, das es ermöglicht, Kommunikation zum Ausfindigmachen von Geräten, die einander unbekannt sind, auf eine energieeffiziente Art und Weise zu ermöglichen.

Eine Aufgabe der vorliegenden Erfindung besteht deshalb darin, ein Verfahren zu schaffen, das es ermöglicht, Daten zwischen zwei einander unbekannten Geräten drahtlos auszutauschen und das es ferner ermöglicht, seitens Geräten, die ausfindig gemacht werden sollen, energieeffizient ausgeführt zu werden.

Diese Aufgabe wird durch den Gegenstand der unabhängigen Patentansprüche gelöst.

Der Kerngedanke der vorliegenden Erfindung besteht darin, erkannt zu haben, dass obige Aufgabe dadurch gelöst werden kann, dass ein Verfahren Schritte aufweist, in denen eine Anbieter-Vorrichtung zum Auffinden anderer Geräte eine Drahtlosnetzwerkumgebung bereitstellt, die eine Netzwerkidentifikation aufweist. Geräte, die sich in einem Betriebszustand befinden, der ein Auffinden zulässt, sind konfiguriert, um sich basierend auf der Netzwerkidentifikation mit der Anbieter-Vorrichtung mittels einer Drahtlosnetzwerkverbindung automatisch zu verbinden und, um relevante Daten auszutauschen.

Ein energieintensives Bereitstellen der Drahtlosnetzwerkumgebung erfolgt somit anbieterseitig, während ein Aufbau einer Verbindung innerhalb der Drahtlosnetzwerkumgebung seitens des Annehmers lediglich dann erfolgt, wenn eine entsprechende Drahtlosnetzwerkumgebung verfügbar ist. Das bedeutet, dass annehmerseitig energiesparend überwacht werden kann, ob eine entsprechende Netzwerkumgebung verfügbar und benötigt ist. Dieser energiesparende Betrieb ermöglicht eine verlängerte annehmerseitige Betriebsdauer.

Ausführungsbeispiele der vorliegenden Erfindung schaffen ein Verfahren zum Austausch von Daten zwischen einem Anbieter und einem dem Anbieter unbekannten Annehmer. Das Verfahren umfasst ein anbieterseitiges Bereitstellen einer Drahtlosnetzwerkumgebung mit einer Netzwerkidentifikation, was ein anbieterseitiges Senden der Netzwerkidentifikation umfasst. Das Verfahren weist ein annehmerseitiges Aktivieren einer Drahtlosschnittstelle und ein annehmerseitiges Empfangen der Netzwerkidentifikation auf. Das Verfahren umfasst eine annehmerseitige Überprüfung, ob die Netzwerkidentifikation eine Zeichenkette aufweist. Eine automatische Initiierung eines Herstellens einer Netzwerkverbindung zwischen dem Anbieter und dem Annehmer erfolgt auf den Empfang der Netzwerkidentifikation hin, wenn die Zeichenkette mit mindestens einer vorbestimmten Zeichenkette übereinstimmt. Das Verfahren umfasst eine anbieterseitige bzw. annehmerseitige Übermittlung einer Protokollvorschlagsnachricht, um ein Protokoll zur Übermittlung der Daten vorzuschlagen und eine annehmerseitige bzw. Anbieterseitige Übermittlung einer Protokollannahmenachricht, um das Protokoll zur Übermittlung der Daten zu bestätigen. Das Verfahren umfasst eine automatische annehmerseitige Übermittlung von Daten zu dem Anbieter, wobei das automatische Initiieren nicht ausgeführt wird, wenn die Netzwerkidentifikation die Zeichenkette nicht aufweist.

Vorteilhaft an diesen Ausführungsbeispielen ist, dass ein Austausch von Daten automatisiert zu Zeitpunkten erfolgen kann, in welchem ein Annehmer eine Anwesenheit einer geeigneten Drahtlosnetzwerkumgebung feststellt. Ferner können die Verfahren auch bei einer Abwesenheit einer übergeordneten Kommunikationsinfrastruktur ausführbar sein, wenn anbieterseitig eine entsprechende Infrastruktur bereitgestellt wird.

Ferner kann das Verfahren basierend auf einer beliebigen Drahtlosnetzwerkverbindung implementierbar sein, so dass das Verfahren ggf. herstellerunabhängig oder von proprietären Standards erfolgen kann.

Weitere Ausführungsbeispiele der vorliegenden Erfindung schaffen Verfahren, bei denen die Netzwerkidentifikation eine Zeichenkette aufweist, die die Drahtlosnetzwerkumgebung als eine von einer an dem Verfahren beteiligte Anbieter-Vorrichtung bereitgestellte Drahtlosnetzwerkumgebung ausweist. Die Zeichenkette kann den Anbieter gegenüber dem Annehmer als aufsuchenden bzw. Hilfe-anbietenden Netzwerkknoten ausweisen.

Vorteilhaft an diesen Ausführungsbeispielen ist, dass ein Herstellen der Netzwerkverbindung zwischen dem Anbieter und dem Annehmer basierend auf der Zeichenkette erfolgen kann und so ein weiterer Kommunikationsablauf durch den Empfang der Netzwerkidentifikation und mithin der Zeichenkette beeinflusst oder automatisiert sein kann. Die Beeinflussung kann beispielsweise derart erfolgen, dass besonders relevante Daten automatisch verschickt werden, wie etwa eine Position, ein Batteriestatus oder ein Gesundheitszustand.

Ferner ist an diesen Ausführungsbeispielen vorteilhaft, dass ein Verbindungsaufbau und der damit verbundene Einsatz von Energie zu solchen Anbietern, von denen der Annehmer bspw. keine Hilfe, Erkennung oder einen anderen als den gewünschten Dienst erwartet, vermieden werden kann und so eine Energieeffizienz des Betriebs des Annehmers erhöht werden kann.

Weitere Ausführungsbeispiele der vorliegenden Erfindung schaffen Verfahren, bei denen die Netzwerkverbindung annehmerseitig geschlossen wird, nachdem die Daten zu dem Anbieter übertragen worden sind.

Vorteilhaft an diesen Ausführungsbeispielen ist, dass eine annehmerseitige Schließung der Netzwerkverbindung dem Anbieter anzeigen kann, dass alle relevanten Daten übertragen worden sind und der Anbieter anschließend Kontakt zu anderen Annehmern aufnehmen kann.

Weitere Ausführungsbeispiele der vorliegenden Erfindung schaffen Verfahren, bei denen der Anbieter überprüft, ob die Netzwerkverbindung geschlossen worden ist und die Netzwerkverbindung gegebenenfalls anbieterseitig schließt.

Vorteilhaft an diesen Ausführungsbeispielen ist, dass anbieterseitig weitere Annehmer ausfindig gemacht werden können, auch wenn ein zu einem Zeitpunkt eine Netzwerkverbindung zu dem Anbieter unterhaltender Annehmer einen Defekt aufweist oder die Netzwerkverbindung korrumpiert ist, so dass eine Beeinflussung einer Funktionsfähigkeit des Anbieters minimiert oder verhindert ist.

Weitere Ausführungsbeispiele der vorliegenden Erfindung schaffen Verfahren, die ein annehmerseitiges Erzeugen eines Steuerbefehls und ein Versetzen einer Vorrichtung in einen Annehmer-Zustand mittels des Steuerbefehls umfassen.

Vorteilhaft an diesen Ausführungsbeispielen ist, dass beispielsweise mittels eines Tasten- oder Knopfdrucks oder einer Tastenkombination eine Vorrichtung, wie etwa ein Mobiltelefon, in einen Annehmer-Modus versetzt werden kann, und die Vorrichtung anschließend beispielsweise in einem energiesparenden Betriebsmodus solange betrieben werden kann, bis eine geeignete Drahtlosnetzwerkumgebung in Reichweite ist.

Weitere Ausführungsbeispiele der vorliegenden Erfindung schaffen eine Annehmer-Vorrichtung, die konfiguriert ist, um eine Drahtlosschnittstelle zu aktivieren, eine Netzwerkidentifikation einer Drahtlosnetzwerkumgebung zu empfangen, zu überprüfen, ob die Netzwerkidentifikation eine Zeichenkette aufweist, ein Herstellen einer Netzwerkverbindung zu einer Anbieter-Vorrichtung auf den Empfang der Netzwerkidentifikation hin automatisch zu initiieren, wenn die Zeichenkette mit mindestens einer vorbestimmten Zeichenkette übereinstimmt und, um Daten automatisch zu dem Anbieter zu übermitteln. Die Annehmer-Vorrichtung ist konfiguriert, um das Herstellen der Netzwerkverbindung zwischen der Anbieter-Vorrichtung und der Annehmer-Vorrichtung auf den Empfang der Netzwerkidentifikation hin nicht zu initiieren, wenn die Netzwerkidentifikation die Zeichenkette nicht aufweist. Die Annehmer-Vorrichtung ist konfiguriert, um eine Protokollvorschlagsnachricht zu übermitteln, um ein Protokoll zur Übermittlung der Daten vorzuschlagen oder um eine Protokollannahmenachricht zu übermitteln, um das Protokoll zur Übermittlung der Daten zu bestätigen

Weitere Ausführungsbeispiele der vorliegenden Erfindung schaffen eine Anbieter-Vorrichtung, die konfiguriert ist, um eine Drahtlosnetzwerkumgebung mit einer Netzwerkidentifikation bereitzustellen und die Netzwerkidentifikation zu senden, eine Netzwerkverbindung zu einer Annehmer-Vorrichtung herzustellen bzw. zuzulassen und, um Daten von der Annehmer-Vorrichtung zu empfangen. Die Anbieter-Vorrichtung ist konfiguriert, um ein Zeitintervall zu starten, wenn die Netzwerkverbindung hergestellt ist oder wenn die Daten von der Annehmer-Vorrichtung empfangen worden sind und um die Netzwerkverbindung nach Ablauf des Zeitintervalls zu schließen. Die Anbieter-Vorrichtung ist konfiguriert, um eine Protokollannahmenachricht zu übermitteln, um ein Protokoll zur Übermittlung der Daten zu bestätigen oder um eine Protokollvorschlagsnachricht zu übermitteln, um das Protokoll zur Übermittlung der Daten vorzuschlagen

Weitere Ausführungsbeispiele der vorliegenden Erfindung schaffen eine Drahtlosnetzwerkumgebung mit einer Anbieter-Vorrichtung und einer Annehmer-Vorrichtung und ein Computerprogramm zur Durchführung erfindungsgemäßer Verfahren.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen: In nachfolgenden Ausführungen soll unter dem Begriff Responder, d.h. Antwortender, eine Person verstanden werden, die eine Anbieter-Vorrichtung mit sich führt. Eine Anbieter-Vorrichtung bezeichnet eine eine Netzwerkumgebung bereitstellende Vorrichtung und wird nachfolgend auch als Anbieter oder Beacon bezeichnet. Als Annehmer-Vorrichtung oder Annehmer soll nachfolgend eine Vorrichtung verstanden werden, die ausgebildet ist, um sich innerhalb der Netzwerkumgebung mit dem Anbieter zu verbinden. Annehmer werden auch als (Dienst-)Suchender bzw. dem englischen Begriff Seeker bezeichnet.

Fig. 1 ein schematisches Ablaufdiagramm eines Verfahrens zum Austausch von Daten zwischen einem Anbieter und einem dem Anbieter unbekannten Annehmer;

Fig. 2 ein schematisches Prozessdiagramm eines Prozessablaufs, der annehmerseitig, das heißt auf Seiten eines Seekers ausführbar ist;

Fig. 3 ein schematisches Zustandsdiagramm mit einem anbieterseitigem Prozessablauf;

Fig. 4 ein schematisches Diagramm mit einem Verbindungsablauf zwischen einem Anbieter (Beacon) und einem Annehmer (Seeker); und

Fig. 5 ein schematisches Blockschaltbild einer Netzwerkumgebung mit der Annehmer-Vorrichtung (Beacon) und drei Annehmer-Vorrichtungen (Seeker).

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

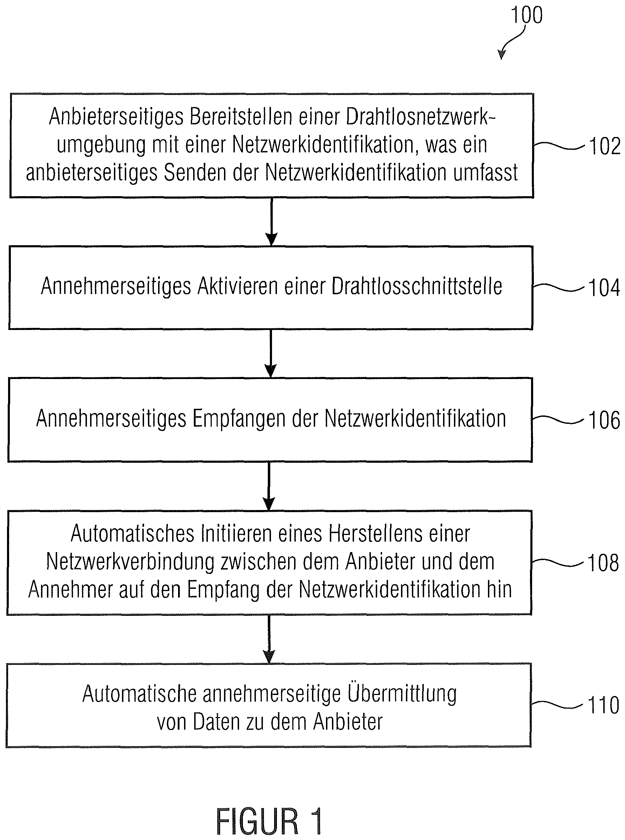

Fig. 1 zeigt ein schematisches Ablaufdiagramm eines Verfahrens 100 zum Austausch von Daten zwischen einem Anbieter und einem dem Anbieter unbekannten Annehmer. Ein erster Schritt 102 umfasst ein anbieterseitiges Bereitstellen einer Drahtlosnetzwerkumgebung mit einer Netzwerkidentifikation, was ein anbieterseitiges Senden der Netzwerkidentifikation umfasst. Ein Schritt 104 umfasst ein annehmerseitiges Aktivieren einer Drahtlosschnittstelle, etwa einer Wi-Fi®-Schnittstelle eines Mobiltelefons. Ein Schritt 106, der auf den Schritt 104 folgt, umfasst ein annehmerseitiges Empfangen der Netzwerkidentifikation.

Der Schritt 106 kann beispielsweise derart ausgeführt werden, dass ein anbieterseitiges Senden der Netzwerkidentifikation, etwa mittels einer sogenannten "Beacon-Nachricht" an alle potentielle Kommunikationsteilnehmer (ein sogenannter Rundruf - engl. Broadcast) von einem Annehmer empfangen wird.

Das Verfahren 100 umfasst einen Schritt 108, der auf den Schritt 106 folgt, und der ein automatisches Initiieren eines Herstellens einer Netzwerkverbindung zwischen dem Anbieter und dem Annehmer umfasst. Das automatische Initiieren des Herstellens der Netzwerkverbindung erfolgt dabei auf den Empfang der Netzwerkidentifikation hin. Beispielsweise kann der Annehmer konfiguriert sein, um basierend auf der Netzwerkidentifikation oder basierend auf einer Zeichenkette innerhalb der Netzwerkidentifikation ein Signal bereitzustellen, das das Herstellen der Netzwerkverbindung auslöst. Dies kann auch so formuliert werden, dass der Annehmer auf den Empfang einer entsprechenden Netzwerkidentifikation wartet und bei Eintritt des Empfangs bzw. bei einem erfolgten Empfang die Netzwerkidentifikation auswertet und die Herstellung der Netzwerkverbindung auslöst.

Beispielsweise weist die Netzwerkidentifikation eine Zeichenkette auf, die von dem Annehmer so interpretiert werden kann, etwa mittels Vergleich der Zeichenkette mit einer oder mehreren möglichen vorbestimmten Zeichenketten, dass der Anbieter einen Kommunikationsdienst - das Erfassen, Auffinden und/oder Kommunizieren mit dem Annehmer - anbietet. Die eine oder mehrere möglichen vorbestimmten Zeichenketten können in einem Speicher des Annehmers gespeichert sein. Der Anbieter ist basierend auf der von ihm bereitgestellten Netzwerkidentifikation als Anbieter oder Bereitsteller des Kommunikationsdienstes erkennbar oder identifizierbar.

Ein Schritt 110 des Verfahrens 100 umfasst eine automatische annehmerseitige Übermittlung von Daten zu dem Anbieter. Der Schritt 110 folgt auf den Schritt 108, wobei der Schritt 108 als die Etablierung oder Einrichtung einer Kommunikationsstrecke zwischen dem Annehmer und dem Anbieter verstanden werden kann. Der Schritt 110 kann als Übermittlung von Nutz-Information (Daten) verstanden werden. Dabei können die übermittelten Daten beispielsweise Angaben zu dem Annehmer oder einem Benutzer desselben aufweisen, wie etwa eine aktuelle Position, eine Zeitangabe oder eine durch den Benutzer generierten Nachricht. Die Zeitangabe kann beispielsweise Angaben zu einer Zeitspanne, wie lange der Annehmer bereits auf den Empfang einer entsprechenden Netzwerkidentifikation wartet, umfassen. Alternativ oder zusätzlich können die Daten auch Informationen bezüglich der Annehmer-Vorrichtung, wie etwa eine Identifikationsnummer oder eine Mobilfunknummer aufweisen.

Alternativ oder zusätzlich können die Daten auch Angaben zu einem Batterieladestatus aufweisen. Eine Übermittlung des Batterieladestatus kann beispielsweise vorteilhaft oder relevant sein, wenn der Batterieladezustand einen Hinweis darauf liefern kann, wie lange die Annehmer-Vorrichtung mit dem Batterieladezustand eine Kommunikation aufrechterhalten oder beispielsweise erneut gefunden werden kann, bevor eine leere Batterie dies verhindert.

In Ausführungsbeispielen ist ein Annehmer konfiguriert, um die Initiierung der automatischen Herstellung der Netzwerkverbindung auszuführen, wenn die Zeichenkette der Netzwerkidentifikation mit mindestens einer der vorbestimmten Zeichenketten übereinstimmt, d.h., wenn die Netzwerkidentifikation zumindest eine der vorbestimmten Zeichenketten aufweist. Der Annehmer ist konfiguriert, die Initiierung nicht auszuführen, wenn die Netzwerkidentifikation die Zeichenkette nicht aufweist.

In anderen Worten kann eine Hilfenachricht an die Anbieter-Vorrichtung übermittelt werden, was beispielsweise bedeutet, dass die durch das Opfer konfigurierte Nachricht an den Responder bzw. den Beacon gesendet wird. Weitere Informationen können GPS-Daten, eine Angabe darüber, wie lange ein Seeker schon einen Beacon sucht, oder andere Informationen beinhalten.

Mittels des Verfahrens 100 kann eine Kommunikation zwischen einer Annehmer-Vorrichtung und einer Anbieter-Vorrichtung mittels einer Drahtlos-Kommunikation, etwa Wi-Fi®, ermöglicht werden, auch wenn die Geräte einander unbekannt sind, also beispielsweise kein Pairing, wie es bei Bluetooth® erforderlich ist, durchgeführt wurde. Ferner können zu einem Zeitpunkt oder während eines Zeitintervalls, in welchem die Netzwerkverbindung zwischen dem Anbieter und dem Annehmer besteht, Daten gegebenenfalls automatisch, das heißt unabhängig von einer weiteren Benutzereingabe, austauschbar sein.

Dies ist beispielsweise vorteilhaft, wenn ein Benutzer einer Annehmer-Vorrichtung selbige etwa in einer Situation, in welcher eine Mobilfunkinfrastruktur eingeschränkt nutzbar oder zusammengebrochen ist, in einen Betriebsmodus versetzt, in welchem ein in Reichweite kommender Hilfe-Anbieter (Responder), beispielsweise ein Evakuierungsteam oder eine Versorgungsmannschaft, in Reichweite kommt. Ein Hilfe-Anbieter kann auch ein Opfer, d. h. Betroffene(r), eines Szenarios sein und in der Lage sein, um Hilfe, etwa in Form von Netzwerkdiensten oder Information, bereitstellen zu können und/oder eine Anbieter-Vorrichtung zu betreiben oder initiieren.

Alternativ ist ebenfalls vorstellbar, dass beispielsweise eine Annehmer-Vorrichtung von einem Tier transportiert wird, dessen Anwesenheit, wenn es in eine Reichweite einer Messstation mit einer Anbieter-Vorrichtung kommt, Daten austauscht. Gegenüber Ansätzen, in welchen ein Hilfesuchender (Seeker) permanent oder in bestimmten Zeitintervallen eine Hilfebedarfs-Nachricht aussendet, kann ein derartiger Ansatz zu einer Energieeinsparung und mithin zu verlängerten Betriebszeiten führen, da lediglich zu Zeiten, in denen ein Kommunikationspartner, der Beacon, in Reichweite ist bzw. zur Verfügung steht, die Drahtlosschnittstelle für Sendevorgänge genutzt und eine hierfür benötigte Energie aufgewendet wird. Beispielsweise sind Hilfesuchende (Seeker) in Notsituationen gegebenenfalls nicht in der Lage, Telefone oder sonstige Vorrichtungen mit Energie oder Strom aufzuladen, so dass eine verlängerte Betriebsdauer vorteilhaft sein kann.

Vorteile gegenüber Bluetooth®-basierten Ansätzen sind beispielsweise, dass eine mühsame oder umständliche Paarbildung (Pairing) von Teilnehmern (engl. Peers) zur Bildung eines drahtlosen Netzwerks entfallen kann. Ferner weist beispielsweise Wi-Fi® eine gegenüber Bluetooth® erhöhte Reichweite auf. Während Bluetooth® eine Reichweite von 10-100 m aufweist, können mittels Wi-Fi® Distanzen zwischen Kommunikationsteilnehmern von mehreren 100 m überbrückt werden. Ferner kann bei Wi-Fi® eine hohe Bandbreite nutzbar sein, so dass Daten in einer kurzen Zeitspanne übertragen werden können.

Vorteilhafterweise kann auf eine Anpassung von Betriebssystemen, beispielsweise iOS™ oder Android™ verzichtet werden, da lediglich die Kommunikationsschnittstelle, etwa Wi-Fi®, der Vorrichtung genutzt wird und darunter liegende Schichten (engl. Layer) der Kommunikation unverändert bleiben können.

Ferner weist eine derartige Netzwerkstruktur den Vorteil auf, dass der Anbieter (Beacon) konfiguriert ist, um die entsprechenden Dienste anzubieten und als Zugriffspunkt (engl. Access Point) betrieben zu werden. Dies ermöglicht, dass die Anbieter-Vorrichtung als einzelner Teilnehmer eine Anzahl von n Verbindungen unterhalten kann, was auch als 1:n-Kommunikation bezeichnet wird. Das bedeutet, dass die Anbieter-Vorrichtung gleichzeitig Kenntnis von einer oder mehreren Annehmer-Vorrichtung(en) erlangen kann, um Daten zwischen der Anbieter-Vorrichtung und den beiden Annehmer-Vorrichtung(en) zu übertragen. Eine Reihenfolge, in welcher mehrere mit einer Anbieter-Vorrichtung verbundene Annehmer-Vorrichtungen Daten zu der Anbieter-Vorrichtung übertragen kann einer Reihenfolge, in welcher sich die Annehmer-Vorrichtungen mit der Anbieter-Vorrichtung verbunden haben direkt oder umgekehrt entsprechen. Alternativ kann auch die Annehmer-Vorrichtung zuerst Daten übertragen, die zuerst eine Sendebereitschaft hergestellt hat, d. h. Daten bereitgestellt hat. Dies kann etwa von einer Prozessorgeschwindigkeit oder von einem verwendeten Übertragungsprotokoll, wie einem Nutzer-Datagramm-Protokoll (User-Datagramm-Protocol - UDP), einem Internetprotokoll (IP) und/oder einem Obertragungskontrollprotokoll (Transmission Control Protocol - TCP) beeinflusst sein.

Verfahren 100 kann in technischen Anwendungsbereichen einsetzbar sein, in denen ein Nachverfolgen oder ein Aufspüren von einzelnen oder von Gruppen von drahtlosen Geräten wünschenswert ist, insbesondere dort, wo keine anderen Infrastrukturen für diesen Zweck zur Verfügung stehen.

Eine Annehmer-Vorrichtung kann beispielsweise ein Gerät sein, das ausgebildet ist, um eine Drahtloskommunikation zu ermöglichen und, um von einer Person oder einer Gruppe von Personen in Gebieten, in denen eine existierende Netzwerkinfrastruktur, bspw. ein Mobilfunknetz, schwach, für Störungen anfällig, gestört oder zumindest teilweise zerstört ist. Alternativ kann Verfahren 100 auch eingesetzt werden, um Annehmer-Vorrichtungen unabhängig von Personen oder Tieren, d.h. Trägern der Annehme-Vorrichtungen, ausfindig zu machen.

Orte, Situationen oder Regionen, in denen Verfahren 100 besonders vorteilhaft ist, können beispielsweise Gebiete sein, in denen es keine öffentlichen oder festen Kommunikations-Infrastrukturen gibt oder in denen in Form einer Reaktion auf Notfälle oder (Natur-) Katastrophen eine vorhandene Infrastruktur aufgrund von Überlastung oder Beschädigung unterbrochen oder gestört ist, ersetzt wird.

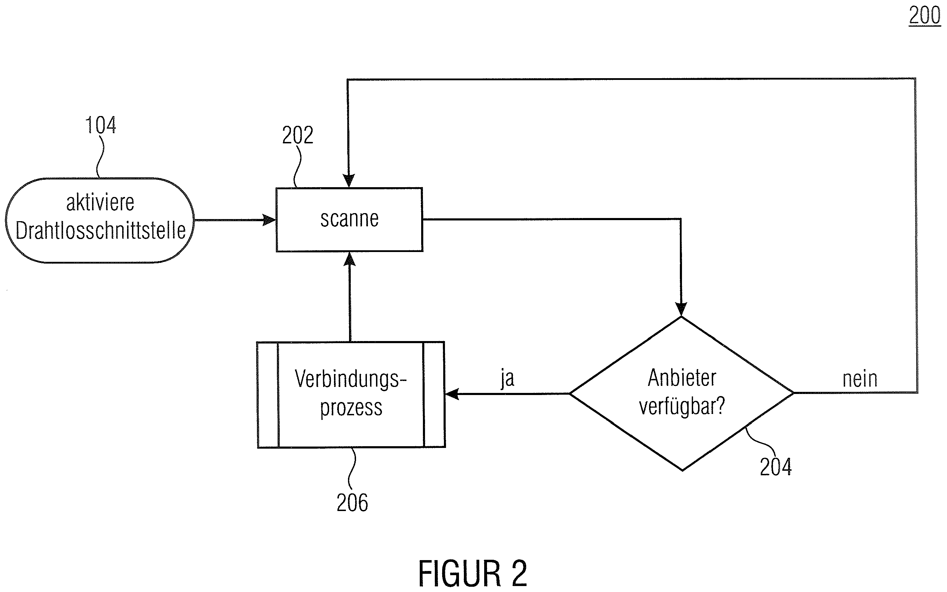

Fig. 2 zeigt ein schematisches Prozessdiagramm eines Prozessablaufs 200, der annehmerseitig, das heißt auf Seiten eines Seekers ausführbar ist. Von einem Grundzustand ausgehend ist ein Seeker bspw. konfiguriert, um mittels des Schritts 104 in einen Zustand 202 zu wechseln, in welchem die Annehmer-Vorrichtung auf Signale anderer Teilnehmer wartet. Das Warten kann ein Scannen eines Drahtlosmediums nach Netzwerkumgebungen umfassen.

Ist kein Anbieter verfügbar, das heißt wird eine Frage in einer Entscheidung 204 ("Anbieter verfügbar?") mit "nein" beantwortet, so kehrt der Annehmer in den Zustand 202 zurück. Ist hingegen ein Anbieter verfügbar, das bedeutet, dass die Frage der Entscheidung 204 mit "ja" beantwortet wird, so ist der Annehmer konfiguriert, um in einen Zustand 206 zu wechseln. In dem Zustand 206, einem Verbindungs-Prozess, kann der Annehmer konfiguriert sein, um Verfahrensschritte zum Übermitteln der Daten an den Anbieter auszuführen, etwa die Schritte 108 und/oder 110.

Im Anschluss daran, etwa wenn zu übermittelnde Daten übermittelt sind, kann der Annehmer konfiguriert sein, um in den Zustand 202 zu wechseln und, um die Umgebung nach weiteren Anbietern zu scannen. Von dem Zustand 202 kann der Annehmer eine Entscheidung/Verzweigung 204 prüfen (Ist ein Anbieter verfügbar?) und den Verbindungsprozess 206 ausführen, wenn ein neuer Anbieter verfügbar ist, d. h., die Frage mit "ja" beantwortet werden kann, um einem weiteren Anbieter ebenfalls die Daten oder andere, ggf. aktuellere Daten zukommen zu lassen. Die Entscheidung 204 kann eine Abfolge von Prozess- oder Rechenschritten umfassen, die von dem Annehmer bzw. einer Recheneinrichtung des Annehmers durchlaufen werden. Alternativ ist ebenfalls vorstellbar, den Verbindungsprozess 206 bzw. eine Kommunikation mit einem Anbieter aufzubauen, mit dem der Annehmer bereits zuvor kommuniziert hat. Der Verbindungsprozess 206 kann einen Schritt aufweisen, in dem eine Drahtloskommunikation zu dem jeweiligen Anbieter nach einer erfolgten und/oder erfolgreichen Senden der Daten getrennt wird.

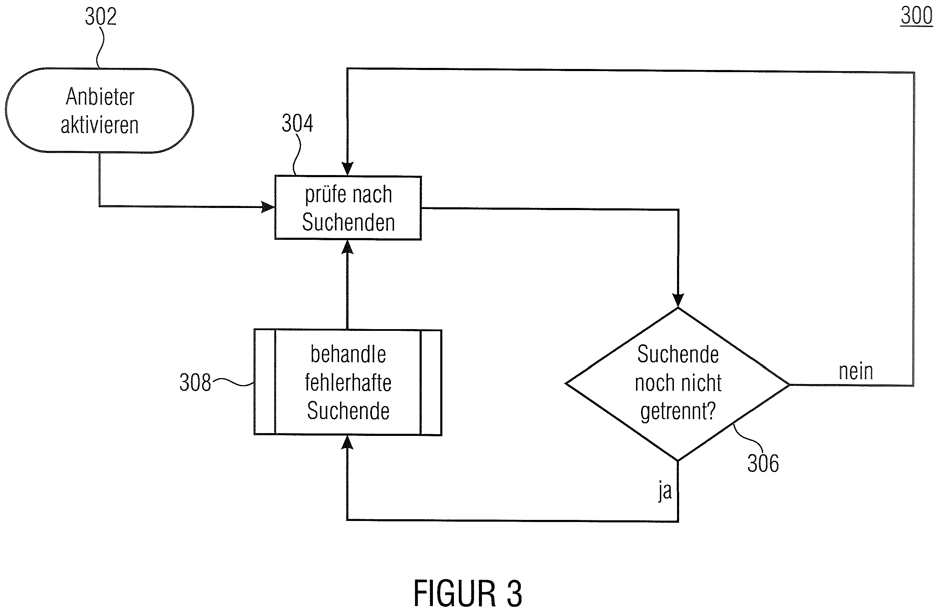

Fig. 3 zeigt ein schematisches Zustandsdiagramm mit einem anbieterseitigen Prozessablauf 300. In einem Zustand 302 wird der Anbieter aktiviert. Dies kann beispielsweise mittels des Bereitstellens der Drahtlosnetzwerkumgebung gemäß dem Schritt 102 des Verfahrens 100 erfolgen. In einem Zustand 304 kann der Anbieter konfiguriert sein, um zu prüfen, ob ein Suchender eine Anfrage nach einer Netzwerkverbindung übermittelt. Das bedeutet, der Anbieter wartet auf eine Reaktion eines Suchenden auf die von ihm ausgesendete Netzwerkidentifikation.

Der Anbieter ist konfiguriert, um aus dem Zustand 304 heraus mittels einer Entscheidung/Verzweigung 306 zu überprüfen, ob Annehmer-Vorrichtungen, das heißt Suchende, die Daten an den Anbieter übermittelt haben, eine Netzwerkverbindung weiterhin aufrechterhalten, das heißt noch keine Trennung von dem Anbieter ausgeführt haben. Die Entscheidung 306 kann eine Abfolge von Prozess- oder Rechenschritten umfassen, die von dem Annehmer bzw. einer Recheneinrichtung des Annehmers durchlaufen werden. Wird die Frage in der Verzweigung 306 mit "nein" beantwortet, das bedeutet haben alle Suchenden, die ihre Daten übermittelt haben, die jeweilige Netzwerkverbindung getrennt, so kann der Anbieter konfiguriert sein, um in den Zustand 304 zu wechseln. Wird die Frage in der Entscheidung 306 jedoch mit "ja" beantwortet, das bedeutet, werden von Annehmer-Vorrichtungen, die die relevanten Daten bereits übermittelt haben, noch Netzwerkverbindungen aufrechterhalten, so kann der Anbieter in einen Zustand 308 wechseln, in dem er fehlerhafte Annehmer-Vorrichtungen behandelt, das heißt darauf reagiert.

In anderen Worten kann in der Entscheidung 306 ein anbieterseitiges Überprüfen, ob die Netzwerkverbindung geschlossen worden ist, erfolgen, nachdem die Daten durch den Anbieter empfangen worden sind. Die Anbieter-Vorrichtung kann ausgebildet sein, um ein Zeitintervall zu starten, wenn die Netzwerkverbindung hergestellt ist oder wenn die Daten empfangen worden sind und die Netzwerkverbindung schließen, wenn das Zeitintervall abgelaufen ist. Das Starten des Zeitintervalls kann basierend auf einem Zeitstempel erfolgen, der dem relevanten Ereignis - etwa letzte empfangene Daten - zugeordnet wird, etwa in einem Speicher des Anbieters. Der Zeitstempel kann mit einer aktuellen Systemzeit des Anbieters verglichen werden und bei überschreiten einer vordefinierten Zeitspanne bzw. eines vordefinierten Zeitintervalls, den Übertritt in den Zustand 308 auslösen. Das vordefinierte Zeitintervall umfasst bspw. eine Dauer von weniger als 1 Sekunde, weniger als 5 Sekunden oder weniger als 20 Sekunden.

Ein Übertritt von dem Zustand 304 in die Entscheidung 306 kann bspw. nach Ablauf eines Prüf-Zeitintervalls erfolgen. Das Prüf-Zeitintervall kann bspw. eine Dauer von weniger als 5 Sekunden, weniger als 10 Sekunden oder weniger als 30 Sekunden umfassen. So kann das Prüf-Zeitintervall nach einem Eintritt in den Zustand 304 gestartet werden und nach Ablauf des Prüf-Zeitintervalls in die Entscheidung 306 gewechselt werden. Alternativ oder zusätzlich kann der Übertritt von dem Zustand 304 in die Entscheidung 306 erfolgen, wenn eine vorbestimmte Anzahl von Annehmern mit dem Anbieter verbunden sind. Ist der Anbieter konfiguriert, um eine Verbindung mit bis zu n (1:n) Annehmern zu unterhalten, kann der Anbieter ausgebildet sein, um bei einer Anzahl von n-1, n-2 oder n-x mit $0 < x \geq n$ verbundenen Annehmer in die Entscheidung 306 überzutreten.

Eine Annehmer-Vorrichtung kann beispielsweise dann als fehlerhaft von dem Anbieter angenommen werden, wenn eine Nachricht, die eine Information bezüglich einer zu trennenden Drahtlosnetzwerkumgebung aufweist, während einer Übertragung von dem Seeker zu dem Beacon fehlerhaft ist, oder von dem Anbieter nicht mehr empfangen werden kann, da sich dieser zu dem Zeitpunkt, an dem dem Beacon die entsprechende Nachricht von dem Seeker übermittelt wird, außerhalb des Sendebereichs des Seekers befindet. Alternativ kann es sich bei fehlerhaften Annehmer-Vorrichtungen auch um fehlerhaft oder mit böser Absicht programmierte Annehmer-Vorrichtungen handeln.

In dem Zustand 308 kann beispielsweise der Annehmer einen Neustart ausführen und so zumindest eine oder alle bestehenden Netzwerkverbindungen trennen. Alternativ oder zusätzlich ist ebenfalls vorstellbar, dass der Anbieter konfiguriert ist, um in dem Zustand 308 ein neues Passwort für sein Drahtlosnetzwerk zu erstellt und/oder es als fehlerfrei erachteten Annehmern übermittelt. Ein verändertes Passwort kann zu einem Verbindungsabbruch zwischen dem Anbieter und mit ihm verbundenen Annehmern und mithin zu einer beendeten Kommunikation führen. Damit kann es fehlerhaften Annehmer-Vorrichtungen zumindest erschwert werden, eine neue, gegebenenfalls fehlerhafte, Verbindung aufzubauen. In anderen Worten kann in dem Zustand 308 ein anbieterseitiges Schließen der Netzwerkverbindung erfolgen, wenn die Verbindung nicht annehmerseitig geschlossen worden ist.

Um zu verhindern, dass boshafte (d.h. fehlerhaft programmierte) Annehmer-Vorrichtungen eine Netzwerkverbindung mit dem Anbieter aufbauen können, kann beispielsweise auch der Schritt 102 des Verfahrens 100 derart ausgeführt werden, dass das Drahtlosnetzwerk mit einem Sicherheitsalgorithmus, etwa mittels sogenanntem Wi-Fi®-Protected Access (WPA) oder Wired Equivalent Privacy (WEP) geschützt wird. Beispielsweise kann ein Passwort des Sicherheitsalgorithmus ein Generalschlüssel (engl. Master-Key) sein, welcher der Anbieter-Vorrichtung und den als fehlerfrei erachteten Annehmer-Vorrichtungen bekannt ist. Als fehlerfrei angenommene Annehmer-Vorrichtungen können beispielsweise Annehmer-Vorrichtungen erachtet werden, die etwa eine Software nutzen, die von zertifizierten, bekannten oder vertrauenswürdigen Anbietern programmiert und/oder zugelassen ist.

Der Generalschlüssel für den Sicherheitsalgorithmus kann beispielsweise eine (partielle) grundlegende (engl. basic) SSID - BSSID der Netzwerkumgebung oder eine MAC Adresse der Annehmer-Vorrichtung sein. Mittels einer kryptographischen Einwegfunktion, bspw. eine Pseudo-Zufallsfunktion (engl. pseudo-random function), kann basierend auf dem Generalschlüssel und einem geheimen, individuellen Schlüssel ein Passwort seitens der Annehmer-Vorrichtung und/oder der Anbietervorrichtung ableitbar sein. Der individuelle Schlüssel ist bspw. Teil einer Anwendung oder eines Programms oder von einem Benutzer eingebbar, d.h., dieser/diesem bekannt. In anderen Worten kann der individuelle Schlüssel in der Anbieter-Vorrichtung und der Annehmer-Vorrichtung gespeichert sein oder dieser bereitgestellt werden.

Fehlerhafte oder boshafte (Nutzer von) Annehmer-Vorrichtungen können ggf. in der Lage sein, den Generalschlüssel ermitteln, etwa durch Abhören der gesendeten Nachrichten. Eine Ermittlung des individuellen Schlüssels durch fehlerhafte oder boshafte Annehmer kann basierend darauf, dass der individuelle Schlüssel während einer Passworterstellung oder einer Authentifizierung des Annehmers bei dem Anbieter nicht übermittelt werden muss, verhindert werden. Eine Übermittlung kann sich auf ein annehmerseitig übermittelte Passwort beschränken, welches jedoch auf dem (fehlerhaften Vorrichtungen unbekannten) individuellen Schlüssel basiert. So kann eine Einwahl oder eine Verbindung fehlerhafter oder boshafter Annehmer verhindert werden. Eine annehmerseitige Passworterstellung kann wie folgt beschrieben werden.

$$C = f(P, K),$$

wobei
C das Passwort, f die kryptographische Einwegfunktion, P den Generalschlüssel und K den geheimen individuellen Schlüssel, der nur der Anwendung bzw. dem Programm oder einem Nutzer desselben bekannt ist, bezeichnet. Das bedeutet, dass in obiger Ausführung P und K Operanden der Funktion f sind. Die kryptographische Einwegfunktion kann bspw. eine Hash-Funktion sein, etwa SHA-512.

Alternativ ist ebenfalls vorstellbar, dass fehlerhafte Annehmer-Vorrichtungen beispielsweise unter Verwendung deren MAC-Adressen auf eine Verweigerungsliste (engl. Blacklist) eingetragen werden und eine zukünftige Kommunikation mit diesen Annehmer-Vorrichtungen zukünftig abgelehnt wird. Dies kann beispielsweise mittels einer Firewall in dem Kommunikationsprozess realisiert werden.

Alternativ oder zusätzlich kann das Beacon auch konfiguriert sein, um die Netzwerkidentifikation in dem Zustand 304, in der Verzweigung 306 und/oder in dem Zustand 308 auszusenden.

In anderen Worten kann für fehlerhafte Seeker seitens des Annehmers zwischen zwei Situationen unterschieden werden. In einer ersten Situation können fehlerhafte Annehmer-Vorrichtungen, die bereits eine Verbindung aufgebaut haben, getrennt werden. In einer zweiten Situation können Versuche unternommen werden, um eine Verbindung mit fehlerhaften Annehmer-Vorrichtungen seitens der Anbieter-Vorrichtung zu verhindern.

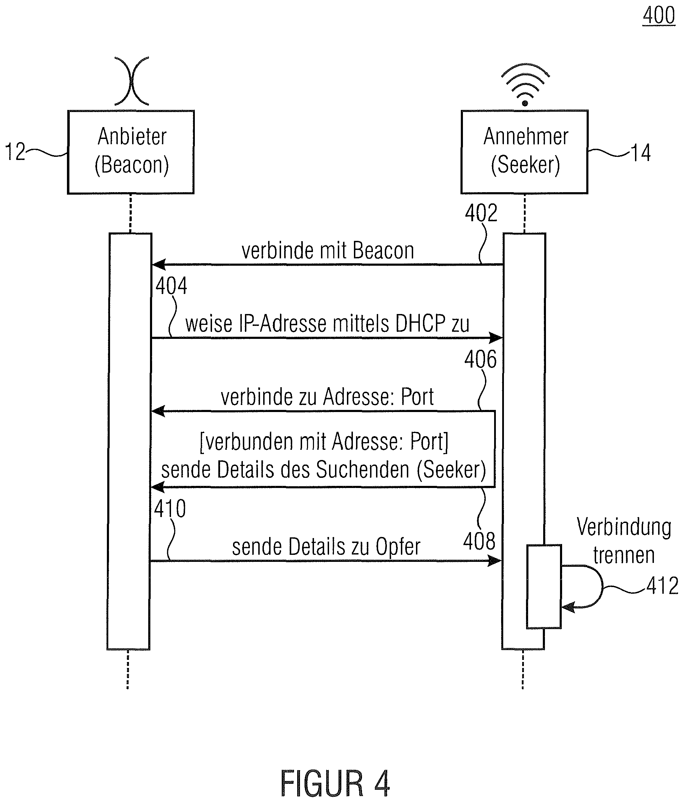

Fig. 4 zeigt ein schematisches Diagramm mit einem Verbindungsablauf 400 zwischen einem Anbieter (Beacon) 12 und einem Annehmer (Seeker) 14. Der Verbindungsprozess 400 weist einen Schritt 402 auf, in welchem sich der Seeker 14 mit dem Beacon 12 verbindet. Das Beacon 12 kann beispielsweise ausgebildet sein, um ein dynamisches Anbieterkonfigurationsprotokoll (engl. Dynamic Host Configuration Protocol - DHCP) in Form eines DHCP-Servers auszuführen und Dienste wie eine Zuweisung einer Netzwerkadresse bereitzustellen.

Der Schritt 402 kann auch beinhalten, dass der Seeker 14 und/oder das Beacon 12 konfiguriert sind, um Daten über ein zu verwendendes Kommunikationsprotokoll auszutauschen. Dieses Protokoll könnte auf einem bestimmten Standard beruhen oder auch ein proprietäres Protokoll sein, auf das sich das Beacon 12 und der Seeker 14 mittels Nachrichtenaustausch geeinigt haben. Dies kann durch eine anbieterseitige bzw. annehmerseitige Übermittlung einer Protokollvorschlagsnachricht erfolgen. Mittels der Protokollvorschlagsnachricht kann die Anbieter-Vorrichtung 12 oder die Annehmer-Vorrichtung 14 ein Protokoll zur Ermittlung der Daten vorschlagen. Der jeweilige Empfänger der Protokollvorschlagsnachricht, das heißt die Annehmer-Vorrichtung 14 bzw. die Anbieter-Vorrichtung 12 kann daraufhin eine Protokollannahmenachricht aussenden, um das Protokoll zur Ermittlung der Daten zu bestätigen.

Mittels des DHCP-Servers kann das Beacon 12 konfiguriert sein, um dem Seeker 14 eine Netzwerkadresse für die folgende Kommunikation zuzuweisen. Nutzen der Anbieter und der Annehmer beispielsweise das Internetprotokoll (IP) und/oder das Übertragungskontrollprotokoll (Transmission Control Protocol - TCP), so kann es sich bei der Netzwerkadresse beispielsweise um eine IP-Adresse handeln (Schritt 404).

Der Seeker 14 ist konfiguriert, um in einem Schritt 406 basierend auf der IP-Adresse eine sogenannte "Socket-Adresse" umfassend die IP-Adresse des Beacons 12 und einen zugehörigen Anschluss, das heißt Port der Kommunikationsschnittstelle, ansprechen und, um sich mit dieser Socket-Adresse zu verbinden. Im Anschluss daran kann der Annehmer 14 konfiguriert sein, um die Daten in einem Schritt 408 an den Anbieter senden.

Der Anbieter 12 kann konfiguriert sein, um in einem Schritt 410 Informationen an den Annehmer 14 zu übermitteln, beispielsweise können dies Details sein, die ein eventuelles Opfer einer Katastrophe benötigt, etwa eine Entfernung eines Evakuierungsplatzes. Wird bspw. mittels der Netzwerkidentifikation, etwa die SSID eines Wi-Fi®-Netzwerks, ein Sammelplatz mitgeteilt, kann eine Koordinate Teil der Details sein. Die Koordinaten können mittels GPS, GLONASS oder GALILEO oder anderen Geokoordinaten(-systemen) mitgeteilt werden. Die Koordinaten können annehmerseitig genutzt werden, um, ggf. automatisch, eine Wegbeschreibung zu dem Sammelplatz zu erstellen.

Der Annehmer 14 kann konfiguriert sein, um in einem Schritt 412 die Verbindung zu dem Anbieter 12 zu trennen. Dies kann gegebenenfalls die Übermittlung einer entsprechenden Nachricht an die Anbieter 12 umfassen. In anderen Worten kann ein annehmerseitiges Schließen der Netzwerkverbindung erfolgen, nachdem die Daten zu dem Anbieter übertragen worden sind.

Die Annehmer-Vorrichtung 14 kann konfiguriert sein, um die Verbindung zu der Anbieter-Vorrichtung 12 beispielsweise nach Ablauf eines bestimmten Zeitlimits, nachdem ein Nutzer der Anbieter-Vorrichtung eine Trennung der Verbindung über einen Steuerbefehl auslöst, zu schließen. Der Steuerbefehl kann über eine Nutzerschnittstelle (User Interface - UI) generierbar sein.

Alternativ ist ebenfalls vorstellbar, dass die Anbieter-Vorrichtung 12 und/oder die Annehmer-Vorrichtungen 14 konfiguriert ist, um die Verbindung zu trennen, nachdem die benötigten Informationen zwischen beiden Geräten ausgetauscht wurden oder nachdem es seitens des Anbieters 12 aus dem Netzwerk entfernt (Kick-out) wurde, da neuere, d.h. noch unbekannte oder andere Annehmer-Geräte sich mit dem Anbieter 12 verbinden möchten. Ist die Anbieter-Vorrichtung bspw. konfiguriert, um acht Verbindungen zu Annehmern zu unterhalten (1:n; n=8), kann die Anbieter-Vorrichtung bspw. konfiguriert sein, um bei einer Anzahl von fünf, sieben oder acht verbundenen Annehmern, eine Überprüfung durchzuführen, ob die Verbindung zu einer, mehrere oder alle Annehmer-Vorrichtung zu trennen ist, um eine Anzahl von bspw. n neuen Verbindungen zuzulassen.

In anderen Worten kann der Austausch von Daten zwischen Beacon 12 und Seeker 14 auch derart gehandhabt werden, dass das Beacon 12 einen DHCP-Server betreibt, um eine IP-Adresskonfiguration für den Seeker 14 bereitzustellen. Das Beacon 12 kann auf eine spezifische Socket-Adresse hören, das heißt für diese Adresse einen Kommunikationskanal öffnen, um Einzelheiten über diesen Kommunikationskanal auszutauschen, wenn das Seeker 14 eine Assoziierung mit dem Beacon 12 ausgeführt hat, das heißt mit dem Beacon 12 verknüpft ist. Auf dieser Basis verwenden der Seeker 14 und das Beacon 12 Netzwerkverbindungen, um Daten auszutauschen. Beispielsweise können Daten via TCP/IP, UDP oder einem Datagramm-Auslastungs-Protokoll (Datagram Congestion Control Protocol - DCCP) übermittelt werden.

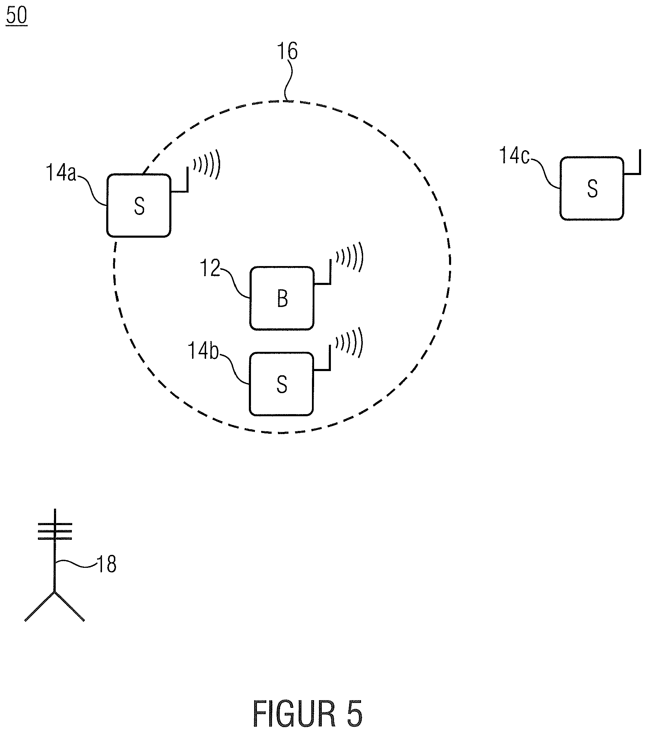

Fig. 5 zeigt ein schematisches Blockschaltbild einer Netzwerkumgebung 50 (Drahtlosnetzwerksystem) mit der Anbieter-Vorrichtung (Beacon) 12 und drei Annehmer-Vorrichtungen (Seeker) 14a-c. Die Anbieter-Vorrichtung 12 und die Annehmer-Vorrichtungen 14a-c weisen jeweils eine Antenne auf und sind ausgebildet, um eine drahtlose Kommunikation aufzubauen. Die Anbieter-Vorrichtung 12 ist konfiguriert, um eine Drahtlosnetzwerkumgebung 16 mit einer Netzwerkidentifikation bereitzustellen, indem die Anbieter-Vorrichtung 12 die Netzwerkidentifikation sendet. Ein Bereich, in welchem die Netzwerkidentifikation von Annehmer-Vorrichtungen 14a-c empfangbar ist, kann einen Bereich der Drahtlosnetzwerkumgebung 16 zumindest teilweise bestimmen.

Die Annehmer-Vorrichtung 14a-c weisen jeweils ebenfalls eine Antenne auf und sind ausgebildet, um eine Drahtlosnetzwerkverbindung aufzubauen. Die Annehmer-Vorrichtungen 14a und 14b befinden sich innerhalb der Netzwerkumgebung 16, und sind konfiguriert, um die Netzwerkidentifikation zu empfangen. Wie es durch die schematischen Funkwellen angedeutet ist, sind die Annehmer-Vorrichtungen 14a und 14b konfiguriert, um der Anbieter-Vorrichtung 12 ihre Anwesenheit mitzuteilen, beispielsweise indem sie annehmerseitig das Verfahren 100 ausführen.

Die Annehmer-Vorrichtung 14c ist außerhalb der Drahtlosnetzwerkumgebung 16 angeordnet und kann, beispielsweise um Energie zu sparen, konfiguriert sein, um auf ein Senden von Nachrichten zu verzichten, bis die Anbieter-Vorrichtung 12 oder eine andere Anbieter-Vorrichtung in Reichweite kommt, das heißt, bis die Annehmer-Vorrichtung 14c innerhalb der Netzwerkumgebung 16 oder einer anderen Netzwerkumgebung angeordnet ist.

Die Anbieter-Vorrichtung 12 kann beispielsweise derart konfiguriert oder programmiert sein, um als Anbieter-Host eines drahtlosen Netzwerks zu fungieren, um zumindest eine Nachricht zu empfangen, wenn sich ein Annehmer-Gerät 14a-c (Seeker) mit der Anbieter-Vorrichtung 12 verbindet, und sich selbige in einem Beacon-Modus befindet. Ein Beacon-Modus, das heißt ein Anbieter-Modus, kann ein Betriebszustand eines portablen oder stationären Gerätes bzw. Vorrichtung sein, die ausgebildet ist, um mittels einer Drahtlosschnittstelle eine Drahtloskommunikation auszuführen. Beispielsweise kann es sich bei der Anbieter-Vorrichtung um ein intelligentes Telefon (Smartphone) handeln, das via eines Programms (z.B. einer mobilen Anwendung - engl. Kurzbezeichnung App) explizit in einen entsprechenden Betriebszustand versetzt wird. Alternativ kann die Anbieter-Vorrichtung 12 mittels einer Benutzereingabe in einen entsprechenden Betriebszustand versetzbar sein.

Ein Einrichten eines Beacon-Gerätes kann beispielsweise kann von einem Benutzer, beispielsweise in der Rolle eines Opfers oder eines Responders über ein Starten einer integrierten oder installierten System-Applikation erfolgen.

Alternativ oder zusätzlich kann beispielsweise ein Steuerbefehl erzeugbar sein, etwa über ein Drücken einer Taste einer Tastenkombination oder eines Knopfes an dem Gerät. Wird beispielsweise eine Taste kurz oder über eine längere Zeit, etwa 1, 5 oder 10 lang Sekunden gedrückt, kann die Anbieter-Vorrichtung 12 konfiguriert sein, um ein Menu an einem Monitor darzustellen, das anhand eines Dialogs, etwa eine Ja/Nein Abfrage ausführt, ob der Nutzer möchte, dass das Gerät das Funkmedium nach ausgestrahlten Nachrichten eines anderen Geräts abhört. Die ausgestrahlten Nachrichten können von einem Netzwerkknoten (engl. HUB) ausgestrahlt werden. In IEEE 802.11, einer Implementierung des Wi-Fi® kann eine SSID basierend auf einer Länge von 32 Byte eine Anzahl von 32 Zeichen repräsentieren, etwa im ASCII-Format (ASCII - American Standard Code for Information Interchange = Amerikanischer Standardcode für Informationsaustausch). Die 32 Zeichen können teilweise mit einer Nachricht wie "Ich bin ein Rettungshelfer", "Sammelplatz hier" oder Gefahr nicht näher kommen" belegt sein.

Alternativ kann das Beacon 12 auch implizit in einen entsprechenden Betriebszustand versetzt werden, beispielsweise wenn der Benutzer versucht, einen Notruf abzusetzen und dies misslingt. Als Ergebnis kann der Benutzer beispielsweise mittels eines Menus gefragt werden, ob er oder sie die entsprechende Vorrichtung, beispielsweise das Telefon, in einen Annehmer-Betriebszustand versetzen möchte.

Die Anbieter-Vorrichtung 12 kann ausgebildet sein, um eine visuelle, taktile, etwa eine Vibration, oder eine akustische Nachricht bereitzustellen, wenn sich eine Annehmer-Vorrichtung 14a-c mit der Anbieter-Vorrichtung 12 verbunden hat.

Die Annehmer-Vorrichtungen 14a-c sind beispielsweise programmiert, um eine Abtastung des Funkmediums nach spezifischen drahtlosen Netzwerkumgebungen 16, die von der Anbieter-Vorrichtung 12 bereitgestellt werden, durchzuführen und/oder, um als Teilnehmer (Client) eines drahtlosen Netzwerks in einer derartigen Netzwerkumgebung 16 zu fungieren und um zumindest eine Nachricht mit Daten zu senden. Das Senden der Nachricht mit Daten kann bspw. durch eine Ausführung des Schrittes 408 erfolgen.

Die Anbieter-Vorrichtung 12 und die Annehmer-Vorrichtungen 14a und 14b bilden basierend auf ihrer Kommunikation untereinander bzw. zwischen der Anbieter-Vorrichtung 12 und der Annehmer-Vorrichtung 14a und 14b ein Drahtlosnetzwerk innerhalb der Netzwerkumgebung 16 aus. Die Annehmer-Vorrichtungen 14a und 14b können konfiguriert sein, um die Anbieter-Vorrichtung 12 von ihrer Existenz mittels eines Sendens von Nachrichten zu benachrichtigen.

Die Anbieter-Vorrichtung 12 und die Annehmer-Vorrichtungen 14a-c können konfiguriert sein, um einem jeweiligen Benutzer eine Rückmeldung über eine sich verändernde Signalstärke während einer Kommunikation mit einem Kommunikationspartner bereitzustellen. Dies kann beispielsweise durch eine Benutzerschnittstelle, eine vibro-taktile Rückmeldung oder einen spezifischen Ton wahrnehmbar gemacht werden.

Dies kann beispielsweise vorteilhaft sein, um vor einem Abbruch einer Kommunikation, beispielsweise wenn die Anbieter-Vorrichtung 12 die Netzwerkumgebung 16 derart bewegt, dass eine Annehmer-Vorrichtung 14a oder 14b die Funkverbindung zu der Anbieter-Vorrichtung 12 möglicherweise verlieren könnte. In diesem Fall kann die Annehmer-Vorrichtung 14a-b konfiguriert sein, um eine benutzerdefinierte Nachricht an die Anbieter-Vorrichtung zu senden. Alternativ kann die Annehmer-Vorrichtung 14a-c konfiguriert sein, um vor einem Zusammenbruch der Kommunikation die Verbindung zu schließen und, um dies der Anbieter-Vorrichtung 12 mitzuteilen.

Ferner ist vorstellbar, dass die Anbieter-Vorrichtung 12 konfiguriert ist, um Daten über erfasste Annehmer-Vorrichtungen 14a-c an eine Basisstation oder eine Befehlsstelle 18 übermittelt. Beispielsweise kann die Annehmer-Vorrichtung 12 eine zusätzliche Kommunikationsschnittstelle, etwa eine Satellitenverbindung, aufweisen, die hierfür geeignet ist. Alternativ kann die Anbieter-Vorrichtung 12 auch konfiguriert sein, um der Befehlsstelle 18 die Daten zu einem Zeitpunkt oder in einem Zeitintervall zu übermitteln, in dem die Befehlsstelle 18 innerhalb der Drahtlosnetzwerkumgebung 16 ist. In anderen Worten kann die Anbieter-Vorrichtung 12 konfiguriert sein, um in einem Notfallreaktionsszenario gesammelte Daten an die Befehlsstelle 18 senden. Die gesammelten Daten können durch Verwendung einer zweiten drahtlosen Schnittstelle oder durch Umschalten von einem Anbieter- in einen Annehmer-Betriebszustand, via eines universellen Serienbusses (Universal Serial Bus - USB) oder über ein lokales drahtgebundenes Netzwerk (Local Area Network - LAN) und/oder über eine Mobilfunkschnittstelle, wie etwa UMTS, LTE, TETRA, via Wi-Fi®, oder dergleichen gesendet werden.

In anderen Worten ist ein Vorteil des Konzeptes, vorhandene Protokolle und Standards der drahtlosen Netzwerkkommunikation zu nutzen, um das Auffinden und Sammeln von drahtlosen Geräten zu ermöglichen. Technisch betrachtet bedeutet Auffinden und Sammeln, drahtlose Netzwerke mittels ihrer SSID zu entdecken und anschließend eine Assoziierung zwischen benachbarten drahtlosen Geräten zu ermöglichen. Auf diese Weise könnte beispielsweise eine Person, die ein drahtloses Gerät trägt, oder ein Tier, an dem ein Gerät befestigt ist, oder lediglich das Gerät selbst "verfolgt" (im Englischen: to track) und gesammelt werden.

Die vorgestellten Verfahren bedienen sich dabei auch einer Drahtloskommunikation, die in einer ad hoc, das heißt von Fall zu Fall, erstellt wird. Beispielsweise können die vorgestellten Verfahren angesichts eines Notfalls oder einer Katastrophe die Rettung verschütteter Menschen unterstützen.

In anderen Worten weisen die vorgestellten Verfahren zwei Rollen auf: einen oder mehrere Antwortende (Responder), die eine Anbieter-Vorrichtung tragen und ein oder mehrere Opfer, die eine Annehmer-Vorrichtung (Seeker) tragen oder sich in der Nähe derselben aufhalten.

Die Anbieter-Vorrichtung kann 12 ausgebildet oder konfiguriert sein, um das Verfahren 100 anbieterseitig auszuführen. Die Annehmer-Vorrichtungen 14a-c können ausgebildet oder konfiguriert sein, um das Verfahren 100 annehmerseitig auszuführen.

Ein Responder trägt eine Anbieter-Vorrichtung (Beacon), das als Beacon auftritt, indem es eine bestimmte Schriftzeichenfolge innerhalb der SSID verwendet. Dadurch strahlt das Beacon-Gerät eine Nachricht aus, beispielsweise eine Art von "Ich bin ein Ersthelfer", die andere Geräte, die nach Wi-Fi®-Netzwerken abtasten, bzw. erfassen können.

Ein Opfer trägt beispielsweise ein Seeker-Gerät, das heißt ein Gerät, das eine Wi-Fi®-Schnittstelle verwendet, um nach Geräten zu suchen, die als Beacon auftreten. Ein Seeker-Gerät verbindet sich mit einem Beacon, sobald es das Beacon entdeckt, um das Beacon von seiner Existenz zu benachrichtigen. Die Anbieter-Vorrichtung und die Annehmer-Vorrichtung können Daten über einen beliebigen Austauschmechanismus austauschen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1.  Verfahren zum Austausch von Daten zwischen einem Anbieter (12) und einem dem Anbieter (12) unbekannten Annehmer (14; 14a-c) mit folgenden Schritten:

    anbieterseitiges Bereitstellen (102) einer Drahtlosnetzwerkumgebung (16) mit einer Netzwerkidentifikation, was ein anbieterseitiges Senden der Netzwerkidentifikation umfasst;
    annehmerseitiges Aktivieren (104) einer Drahtlosschnittstelle;
    annehmerseitiges Empfangen (106) der Netzwerkidentifikation;
    annehmerseitiges Überprüfen, ob die Netzwerkidentifikation eine Zeichenkette aufweist; und
    automatisches Initiieren (108) eines Herstellens (402) einer Netzwerkverbindung zwischen dem Anbieter (12) und dem Annehmer (14; 14a-c) auf den Empfang der Netzwerkidentifikation hin, wenn die Zeichenkette mit mindestens einer vorbestimmten Zeichenkette übereinstimmt;
    anbieterseitige bzw. annehmerseitige Übermittlung einer Protokollvorschlagsnachricht, um ein Protokoll zur Übermittlung der Daten vorzuschlagen;
    annehmerseitige bzw. Anbieterseitige Übermittlung einer Protokollannahmenachricht, um das Protokoll zur Übermittlung der Daten zu bestätigen; und
    automatische annehmerseitige Übermittlung (110; 408) von Daten zu dem Anbieter; wobei das automatische Initiieren nicht ausgeführt wird, wenn die Netzwerkidentifikation die Zeichenkette nicht aufweist;
    **dadurch gekennzeichnet, dass** anbieterseitig eine Mehrzahl von Verbindungen zu einer Mehrzahl von Annehmern aufgebaut und unterhalten wird; und eine Reihenfolge, in welcher mehrere mit einer Anbieter-Vorrichtung verbundene Annehmer-Vorrichtungen Daten zu der Anbieter-Vorrichtung übertragen einer Reihenfolge, in welcher sich die Annehmer-Vorrichtungen mit der Anbieter-Vorrichtung verbunden haben, direkt oder umgekehrt entspricht.

2.  Verfahren gemäß Anspruch 1 das ferner folgenden Schritt aufweist:
    automatisches annehmerseitiges Schließen (412) der Netzwerkverbindung, nachdem die Daten zu dem Anbieter (12) übertragen worden sind.

3.  Verfahren gemäß Anspruch 2, bei dem das automatische annehmerseitige Schließen (412) der Netzwerkverbindung nach einer vorbestimmten Zeitdauer erfolgt.

4.  Verfahren gemäß Anspruch 2 oder 3, das ferner folgende Schritte aufweist:

    anbieterseitiges Überprüfen (306), ob die Netzwerkverbindung geschlossen worden ist, nachdem die Daten durch den Anbieter (12) empfangen worden sind; und
    anbieterseitiges Schließen (308) der Netzwerkverbindung, wenn die Verbindung nicht geschlossen worden ist.

5.  Verfahren gemäß einem der vorangegangenen Ansprüche, das ferner folgende Schritte aufweist:

    anbieterseitiges Starten eines Zeitintervalls, wenn die Netzwerkverbindung hergestellt ist (406) oder wenn die Daten empfangen worden sind (110; 408); und
    anbieterseitiges Schließen der Netzwerkverbindung nach Ablauf des Zeitintervalls.

6.  Verfahren gemäß einem der vorangehenden Ansprüche, bei dem das annehmerseitige Übermitteln von Daten (110; 408) folgenden Schritt aufweist:
    annehmerseitiges Erstellen einer elektronischen Nachricht, die die Daten zumindest teilweise umfasst, wobei die Daten zumindest eines aus

    einer aktuellen annehmerseitigen Position;
    einer Zeitangabe; oder
    einer durch einen annehmerseitigen Benutzer generierten Nachricht aufweist.

7.  Verfahren gemäß einem der vorangegangenen Ansprüche, das ferner folgende Schritte aufweist:

    annehmerseitiges Erzeugen eines Steuerbefehls; und
    Versetzen einer Vorrichtung in einen Annehmer-Zustand mittels des Steuerbefehls.

8.  Verfahren gemäß einem der vorangegangenen Ansprüche, bei dem das automatische Initiieren (108) des Herstellens (402) der Netzwerkverbindung zwischen dem Anbieter (12) und dem Annehmer (14; 14a-c) unter Verwendung einer anbieterseitig zugewiesenen Netzwerkadresse (404) und einer Portnummer erfolgt.

**9.** Verfahren gemäß einem der vorangegangenen Ansprüche, das ferner folgenden Schritt umfasst: anbieterseitiges Übermitteln von durch Annehmer (12) erhaltenen Daten an eine Basisstation (18).

**10.** Verfahren gemäß einem der vorangegangenen Ansprüche, bei dem die Drahtlosnetzwerkumgebung (16) eine Wi-Fi®-Umgebung ist.

**11.** Computerprogramm mit einem Programmcode zur Durchführung annehmerseitiger Schritte eines Verfahrens nach einem der vorangegangenen Ansprüche, wenn das Programm auf einem Computer läuft.

**12.** Annehmer-Vorrichtung (14; 14a-c), die konfiguriert ist, um:

eine Drahtlosschnittstelle zu aktivieren (104);
eine Netzwerkidentifikation einer Drahtlosnetzwerkumgebung (16) zu empfangen (106);
zu überprüfen, ob die Netzwerkidentifikation eine Zeichenkette aufweist;
ein Herstellen (402) einer Netzwerkverbindung zwischen einer Anbieter-Vorrichtung (12) und der Annehmer-Vorrichtung (14; 14a-c) auf den Empfang der Netzwerkidentifikation hin automatisch zu initiieren (108), wenn die Zeichenkette mit mindestens einer vorbestimmten Zeichenkette übereinstimmt; und um
Daten automatisch zu der Anbieter-Vorrichtung (12) zu übermitteln (110; 408); und um
das Herstellen (402) der Netzwerkverbindung zwischen der Anbieter-Vorrichtung (12) und der Annehmer-Vorrichtung (14; 14a-c) auf den Empfang der Netzwerkidentifikation hin nicht zu initiieren (108), wenn die Netzwerkidentifikation die Zeichenkette nicht aufweist; wobei
die Annehmer-Vorrichtung (14; 14a-c) ferner konfiguriert ist, um eine Protokollvorschlagsnachricht zu übermitteln, um ein Protokoll zur Übermittlung der Daten vorzuschlagen oder um eine Protokollannahmenachricht zu übermitteln, um das Protokoll zur Übermittlung der Daten zu bestätigen;
**dadurch gekennzeichnet, dass** die Annehmer-Vorrichtung (14; 14a-c) konfiguriert ist, um die Verbindung als eine aus einer Mehrzahl von Verbindungen von einer Mehrzahl von Annehmer-Vorrichtungen zu der Anbieter-Vorrichtung aufzubauen und zu unterhalten; und konfiguriert ist, um die Daten gemäß einer Reihenfolge unter der Mehrzahl von Annehmer-Vorrichtungen zu übermitteln, wobei die Reihenfolge einer Reihenfolge, in welcher sich die Annehmer-Vorrichtungen mit der Anbieter-Vorrichtung verbunden haben, direkt oder umgekehrt entspricht.

**13.** Anbieter-Vorrichtung (12), die konfiguriert ist, um:

eine Drahtlosnetzwerkumgebung (16) mit einer Netzwerkidentifikation bereitzustellen und die Netzwerkidentifikation zu senden (102);
eine Netzwerkverbindung zwischen der Anbieter-Vorrichtung (12) und einer Annehmer-Vorrichtung (14; 14a-c) herzustellen;
Daten von der Annehmer-Vorrichtung (14; 14a-c) über eine durch die Annehmer-Vorrichtung (14; 14a-c) auf einen Empfang der Netzwerkidentifikation hin automatisch initiierte Netzwerkverbindung zu empfangen;
ein Zeitintervall zu starten, wenn die Netzwerkverbindung hergestellt ist (406) oder wenn die Daten von der Annehmer-Vorrichtung (14; 14a-c) empfangen worden sind (408); und um
die Netzwerkverbindung nach Ablauf des Zeitintervalls zu schließen; wobei
die Anbieter-Vorrichtung (12) ferner konfiguriert ist, um eine Protokollannahmenachricht zu übermitteln, um ein Protokoll zur Übermittlung der Daten zu bestätigen oder um eine Protokollvorschlagsnachricht zu übermitteln, um das Protokoll zur Übermittlung der Daten vorzuschlagen;
wobei die Anbieter-Vorrichtung (12) konfiguriert ist, um eine Mehrzahl von Verbindungen zu einer Mehrzahl von Annehmer-Vorrichtungen aufzubauen und zu unterhalten; und, um die Daten von der Mehrzahl von Annehmer-Vorrichtungen zu erhalten, wobei eine Reihenfolge, in welcher die Mehrzahl von Annehmer-Vorrichtungen Daten zu der Anbieter-Vorrichtung übertragen, einer Reihenfolge, in welcher sich die Annehmer-Vorrichtungen mit der Anbieter-Vorrichtung verbunden haben, direkt oder umgekehrt entspricht.

**14.** Drahtlosnetzwerksystem (50) mit folgenden Merkmalen:

einer Anbieter-Vorrichtung (12) gemäß Anspruch 13; und
einer Annehmer-Vorrichtung (14; 14a-c) gemäß Anspruch 12; und
wobei die Annehmer-Vorrichtung (14; 14a-c) konfiguriert ist, um die Netzwerkverbindung nach dem Übermitteln (408) der Daten zu schließen (412).

**Claims**

**1.** Method of exchanging data between a provider (12) and an acceptor (14; 14a-c) unknown to the provider (12), comprising the following steps:

providing (102), on the part of the provider, a wireless network environment (16) comprising a network identification, which includes the provider transmitting the network identification, activating (104) a wireless interface on the part of the acceptor;
receiving (106) the network identification on the part of the acceptor;
verifying, on the part of the acceptor, whether the network identification comprises a character string; and
upon reception of the network identification, if the character string matches at least one predetermined character string, automatic initiation (108) of establishing (402) a network connection between the provider (12) and the acceptor (14; 14a-c);
transmitting, on the part of the provider and/or the acceptor, a protocol proposal message to propose a protocol for transmitting the data;
transmitting, on the part of the acceptor and/or the provider, a protocol acceptance message so as to confirm the protocol for transmitting the data; and
automatic transmission (110; 408) data to the provider on the part of the acceptor;
wherein said automatic initiation is not performed when the network identification does not comprise the character string;
**characterized in that**
a plurality of connections to a plurality of acceptors is established and maintained on the part of the provider; and an order in which several acceptor devices connected to a provider device transmit data to the provider device corresponds directly or conversely to an order in which the acceptor devices have connected to the provider device.

2. Method as claimed in claim 1, further comprising:

   automatic termination (412) of the network connection on the part of the acceptor once the data has been transmitted to the provider (12).

3. Method as claimed in claim 2, wherein said automatic termination (412) of the network connection on the part of the acceptor is performed following a predefined time period.

4. Method as claimed in claim 2 or 3, further comprising:

   verifying (306), on the part of the provider, whether or not the network connection has been terminated once the data has been received by the provider (12); and
   terminating (308) the network connection on the part of the provider if the connection has not been terminated.

5. Method as claimed in any of the previous claims, further comprising:

   starting a time interval on the part of the provider once the network connection has been established (406) or once the data has been received (110; 408); and
   terminating the network connection on the part of the provider once the time interval has passed.

6. Method as claimed in any of the previous claims, wherein the transmission of data (110; 408) on the part of the acceptor comprises:
   creating, on the part of the acceptor, an electronic message including at least some of the data, the data comprising at least one of the following:

   a current acceptor-side position;
   a time indication; or
   a message generated by an acceptor-side user.

7. Method as claimed in any of the previous claims, further comprising:

   generating a control command on the part of the acceptor; and
   setting a device into an acceptor state by means of the control command.

8. Method as claimed in any of the previous claims, wherein said automatic initiating (108) of the establishing (402) of the network connection between the provider (12) and the acceptor (14; 14a-c) is effected while using a network address (404) allocated on the part of the provider and a port number.

9. Method as claimed in any of the previous claims, further comprising:
   transmitting, on the part of the provider, data obtained from the acceptor (12) to a base station (18).

10. Method as claimed in any of the previous claims, wherein the wireless network environment (16) is a Wi-Fi® environment.

11. Computer program comprising a program code for performing acceptor-side steps of a method as claimed in any of the previous claims, when the program runs on a computer.

12. Acceptor device (14; 14a-c) configured to:

    activate (104) a wireless interface;
    receive (106) a network identification of a wireless network environment (16);

verify whether the network identification comprises a character string;

automatically initiate (108) establishing (402) of a network connection between a provider device (12) and the acceptor device (14; 14a-c) upon reception of the network identification when the character string matches at least one predefined character string; and to

automatically transmit (110; 408) data to the provider device (12); and

not to initiate (108) establishing (402) of the network connection between the provider device (12) and the acceptor device (14; 14a-c) upon reception of the network identification when the network identification does not comprise the character string; wherein

the acceptor device (14; 14a-c) is further configured to transmit a protocol proposal message to propose a protocol for transmitting the data or to transmit a protocol acceptance message so as to confirm the protocol for transmitting the data;

**characterized in that**

the acceptor device (14; 14a-c) is configured to build and maintain the connection as one of a plurality of connections from a plurality of acceptor devices to the provider device; and is configured to transmit the data in accordance with an order among the plurality of acceptor devices, said order directly or conversely corresponding to an order in which the acceptor devices have connected to the provider device.

13. Provider device (12) configured to:

provide a wireless network environment (16) comprising a network identification and to send (102) the network identification;

establish a network connection between the provider device (12) and an acceptor device (14; 14a-c);

receive data from the acceptor device (14; 14a-c) via a network connection which is automatically initiated by the acceptor device (14; 14a-c) upon reception of the network identification;

start a time interval once the network connection has been established (406) or once the data has been received (408) from the acceptor device (14; 14a-c); and to

terminate the network connection once the time interval has passed;

wherein the provider device (12) is further configured to transmit a protocol acceptance message to confirm a protocol for transmitting the data or to transmit a protocol proposal message to propose the protocol for transmitting the data;

wherein the provider device (12) is configured to build and maintain a plurality of connections to a plurality of acceptor devices; and to obtain the data from the plurality of acceptor devices, wherein an order in which the plurality of acceptor devices transmit data to the provider device directly or conversely corresponds to an order in which the acceptor devices have connected to the provider device.

14. Wireless network system (50) comprising:

a provider device (12) as claimed in claim 13; and

an acceptor device (14; 14a-c) as claimed in claim 12; and

wherein the acceptor device (14; 14a-c) is configured to terminate (412) the network connection once the data has been transmitted (408).

## Revendications

1. Procédé d'échange de données entre un fournisseur (12) et un récepteur (14; 14a à c) inconnu du fournisseur (12), aux étapes suivantes consistant à:

mettre à disposition (102), du côté du fournisseur, un environnement de réseau sans fil (16) avec une identification de réseau, ce qui comporte le fait d'envoyer, du côté du fournisseur, l'identification de réseau;

activer (104), du côté du récepteur, une interface sans fil;

recevoir (106), du côté du récepteur, l'identification de réseau;

vérifier, du côté du récepteur, si l'identification de réseau présente une chaîne de caractères; et

initier automatiquement (108) un établissement (402) d'une connexion réseau entre le fournisseur (12) et le récepteur (14; 14a à c) à la réception de l'identification de réseau lorsque la chaîne de caractères coïncide avec au moins une chaîne de caractères prédéterminée;

transmettre, du côté du fournisseur ou du récepteur, un message de proposition de protocole pour proposer un protocole pour la transmission des données;

transmettre, du côté du récepteur ou du fournisseur, un message d'acceptation de protocole pour confirmer le protocole pour la transmission des données; et

transmettre automatiquement (110; 408), du côté du récepteur, des données au fournisseur;

dans lequel l'initiation automatique n'est pas effectuée lorsque l'identification de réseau ne présente pas la chaîne de caractères;

**caractérisé par le fait que**

il est établi et maintenu, du côté du fournisseur, une pluralité de connexions avec une pluralité de récepteurs; et un ordre dans lequel plusieurs de dispositifs de récepteur connectés à un dispositif de fournisseur transmettent des données au dispositif de fournisseur correspond directement ou inversement à un ordre dans lequel les dispositifs de récepteur se sont connectés au dispositif de fournisseur.

**2.** Procédé selon la revendication 1, présentant par ailleurs l'étape suivante consistant à:
terminer automatiquement (412), du côté du récepteur, la connexion réseau après que les données ont été transmises au fournisseur (12).

**3.** Procédé selon la revendication 2, dans lequel la terminaison automatique (412) du côté du récepteur de la connexion réseau a lieu après un laps de temps prédéterminé.

**4.** Procédé selon la revendication 2 ou 3, présentant par ailleurs les étapes suivantes consistant à:

vérifier (306), du côté du fournisseur, si la connexion réseau a été terminée après que les données ont été reçues par le fournisseur (12); et
terminer (308), du côté du fournisseur, la connexion réseau lorsque la connexion n'a pas été terminée.

**5.** Procédé selon l'une des revendications précédentes, présentant par ailleurs les étapes suivantes consistant à:

commencer, du côté du fournisseur, un intervalle de temps lorsque la connexion réseau est établie (406) ou lorsque les données ont été reçues (110; 408); et
terminer, du côté du fournisseur, la connexion réseau après expiration de l'intervalle de temps.

**6.** Procédé selon l'une des revendications précédentes, dans lequel la transmission de données (110; 408) du côté du récepteur présente l'étape suivante consistant à:
établir, du côté du récepteur, un message électronique qui comporte au moins partiellement les données, où les données présentent au moins l'un parmi

une position actuelle du côté du récepteur;
une indication horaire; ou
un message généré par un utilisateur du côté du récepteur.

**7.** Procédé selon l'une des revendications précédentes, présentant par ailleurs les étapes suivantes consistant à:

générer, du côté du récepteur, une instruction de commande; et
déplacer un appareil dans un état de récepteur au moyen de l'instruction de commande.

**8.** Procédé selon l'une des revendications précédentes, dans lequel l'initialisation automatique (108) de l'établissement (402) de la connexion réseau entre le fournisseur (12) et le récepteur (14; 14a à c) a lieu à l'aide d'une adresse réseau attribuée du côté du fournisseur (404) et d'un numéro de port.

**9.** Procédé selon l'une des revendications précédentes, comportant par ailleurs l'étape suivante consistant à:
transmettre, du côté du fournisseur, les données reçues par le récepteur (12) à une station de base (18).

**10.** Procédé selon l'une des revendications précédentes, dans lequel l'environnement de réseau sans fil (16) est un environnement Wi-Fi®.

**11.** Programme d'ordinateur avec un code de programme pour réaliser les étapes, du côté du récepteur, d'un procédé selon l'une des revendications précédentes lorsque le programme est exécuté sur un ordinateur.

**12.** Dispositif de récepteur (14; 14a à c) qui est configuré pour:

activer (104) une interface sans fil;
recevoir (106) une identification de réseau d'un environnement de réseau sans fil (16);
vérifier si l'identification de réseau présente une chaîne de caractères;
initier automatiquement (108) un établissement (402) d'une connexion réseau entre un dispositif de fournisseur (12) et le dispositif de récepteur (14; 14a à c) à la réception de l'identification de réseau lorsque la chaîne de caractères coïncide avec au moins une chaîne de caractères prédéterminée; et pour
transmettre (110; 408) automatiquement des données au dispositif de fournisseur (12); et pour
ne pas initier (108) l'établissement (402) de la connexion réseau entre le dispositif de fournisseur (12) et le dispositif de récepteur (14; 14a à c) à la réception de l'identification de réseau lorsque l'identification de réseau ne présente pas la chaîne de caractères;
dans lequel
le dispositif de récepteur (14; 14a à c) est par ailleurs configuré pour transmettre un message de proposition de protocole pour proposer un protocole pour la transmission des données ou pour transmettre un message d'acceptation de protocole pour confirmer le protocole pour la transmission des données;
**caractérisé par le fait que**
le dispositif de récepteur (14; 14a à c) est configuré pour établir et maintenir la connexion sous forme d'une parmi une pluralité de connexions d'une pluralité de dispositifs de récepteur avec le dispositif de fournisseur; et est configuré pour transmettre les données dans un ordre parmi la pluralité de dispositifs de récepteur, où l'ordre correspond directement ou inversement à un ordre dans lequel les dispositifs de récepteur se sont connectés au dispositif de fournisseur.

13. Dispositif de fournisseur (12), configuré pour:

mettre à disposition un environnement de réseau sans fil (16) avec une identification de réseau et envoyer l'identification de réseau (102); établir une connexion réseau entre le dispositif de fournisseur (12) et un dispositif de récepteur (14; 14a à c);
recevoir des données du dispositif de récepteur (14; 14a à c) par une connexion réseau initialisée automatiquement par le dispositif de récepteur (14; 14a à c) à la réception de l'identification de réseau;
commencer un intervalle de temps lorsque la connexion réseau est établie (406) ou lorsque les données du dispositif de récepteur (14; 14a à c) ont été reçues (408); et pour terminer la connexion réseau après expiration de l'intervalle de temps;
dans lequel
le dispositif de fournisseur (12) est par ailleurs configuré pour transmettre un message d'acceptation de protocole pour confirmer un protocole pour la transmission des données ou pour transmettre un message de proposition de protocole pour proposer le protocole pour la transmission des données;
dans lequel le dispositif de fournisseur (12) est configuré pour établir et maintenir une pluralité de connexions avec une pluralité de dispositifs de récepteur; et pour obtenir les données de la pluralité de dispositifs de récepteur, où un ordre dans lequel la pluralité de dispositifs de récepteur transmettent des données au dispositif de fournisseur correspond directement ou inversement à un ordre dans lequel les dispositifs de récepteur se sont connectés au dispositif de fournisseur.

14. Système de réseau sans fil (50) aux caractéristiques suivantes:

un dispositif de fournisseur (12) selon la revendication 13; et
un dispositif de récepteur (14; 14a à c) selon la revendication 12; et
dans lequel le dispositif de récepteur (14; 14a à c) est configuré pour terminer (412) la connexion réseau après avoir transmis (408) les données.

100

Anbieterseitiges Bereitstellen einer Drahtlosnetzwerkumgebung mit einer Netzwerkidentifikation, was ein
anbieterseitiges Senden der Netzwerkidentifikation umfasst — 102

Annehmerseitiges Aktivieren einer Drahtlosschnittstelle — 104

Annehmerseitiges Empfangen der Netzwerkidentifikation — 106

Automatisches Initiieren eines Herstellens einer
Netzwerkverbindung zwischen dem Anbieter und dem
Annehmer auf den Empfang der Netzwerkidentifikation hin — 108

Automatische annehmerseitige Übermittlung
von Daten zu dem Anbieter — 110

FIGUR 1

FIGUR 2

EP 2 908 565 B1

FIGUR 3

EP 2 908 565 B1

FIGUR 4

50

16

14a

12

14b

14c

18

FIGUR 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060116148 A1
- US 7965983 B1
- US 7877785 B2